# EUROPEAN PATENT APPLICATION

(11) **EP 4 675 566 A1**
(43) Date of publication of application: **07.01.2026**
(21) Application number: 24769804.6
(22) Date of filing: 05.03.2024
(51) Int. Cl.: G06T 17/05

(54) **METHOD AND DEVICE FOR GENERATING THREE-DIMENSIONAL URBAN TEXTURE MODEL ON BASIS OF COMPOSITE DATA**

(30) Priority: 16.03.2023 CN 202310256910; 05.06.2023 CN 202310657905
(71) Applicant: Huawei Cloud Computing Technologies Co., Ltd., Guizhou 550025 (CN)
(72) Inventor: LIU, Jizhe, Gui'an New District, Guizhou 550025 (CN); KANG, Yifei, Gui'an New District, Guizhou 550025 (CN)
(74) Representative: Maiwald GmbH
(86) International application number: PCT/CN2024/080141
(87) International publication number: WO 2024/188110

(57) **Abstract**

Embodiments of this application provide a method for generating a three-dimensional texture model of a city based on composite data, and a device. The method includes: obtaining satellite remote sensing data of a target region, where the satellite remote sensing data is used to determine a three-dimensional framework model and spatial coordinates of a to-be-measured object; obtaining video data within a preset range of the spatial coordinates of the to-be-measured object, where the video data is used to determine a surface texture of the to-be-measured object; and generating a three-dimensional texture model of the to-be-measured object based on the surface texture and the three-dimensional framework model of the to-be-measured object, where the three-dimensional texture model of the to-be-measured object is used to generate a three-dimensional texture model of the target region. The satellite remote sensing data and the video data within the preset range of the spatial coordinates of the to-be-measured object are obtained at low costs, so that costs and difficulty of constructing the three-dimensional texture model of the city are reduced, and costs and difficulty of updating the three-dimensional texture model of the city are reduced.

## Description

This application claims priorities to Chinese Patent Application No. 202310256910.5, filed with the China National Intellectual Property Administration on March 16, 2023 and entitled "METHOD AND APPARATUS FOR GENERATING THREE-DIMENSIONAL CITY MODEL BASED ON AERIAL-GROUND DATA", and to Chinese Patent Application No. 202310657905.5, filed with the China National Intellectual Property Administration on June 5, 2023 and entitled "METHOD FOR GENERATING THREE-DIMENSIONAL TEXTURE MODEL OF CITY BASED ON COMPOSITE DATA, AND DEVICE", both of which are incorporated herein by reference in their entireties.

### TECHNICAL FIELD

Embodiments of this application relate to the field of computers, and more specifically, to a method for generating a three-dimensional texture model of a city based on composite data, a computing apparatus, a computing device cluster, a computer program product, and a computer-readable storage medium.

### BACKGROUND

With continuous development of three-dimensional modeling technologies, construction of a three-dimensional texture model of a city has become a research hotspot. To construct the three-dimensional texture model of the city, it is necessary to obtain real-view images of the city first. Currently, main mapping technologies include an oblique photography technology. In the oblique photography technology, low-altitude drones are used to capture images from different angles within a range of the city, to obtain the real-view images of the city. Then, the three-dimensional texture model of the city is generated by using technologies such as positioning, fusion, and modeling. However, the oblique photography technology requires manual field exploration, route design, and flight control of drones, resulting in high modeling costs. In addition, flight of the low-altitude drones within the range of the city needs to be approved by a related department, and even image capture cannot be performed in some cities. Consequently, modeling is difficult.

Therefore, how to construct a three-dimensional texture model of a city becomes an urgent problem to be resolved.

### SUMMARY

Embodiments of this application provide a method for generating a three-dimensional texture model of a city based on composite data, a computing apparatus, a computing device cluster, a computer program product, and a computer-readable storage medium, to reduce costs and difficulty of constructing the three-dimensional texture model of the city.

According to a first aspect, a method for generating a three-dimensional texture model of a city based on composite data is provided. The method is used to generate the three-dimensional texture model of the city, where the city includes at least one region. A target region is set in the at least one region. The method includes: obtaining satellite remote sensing data of the target region, where the satellite remote sensing data includes image data of a to-be-measured object in the target region, and the image data is used to determine a three-dimensional framework model and spatial coordinates of the to-be-measured object; obtaining video data within a preset range of the spatial coordinates of the to-be-measured object, where the video data includes at least one video image including the to-be-measured object, and the at least one video image is used to determine a surface texture of the to-be-measured object; and generating a three-dimensional texture model of the to-be-measured object based on the surface texture and the three-dimensional framework model of the to-be-measured object, where the three-dimensional texture model of the to-be-measured object is used to generate a three-dimensional texture model of the target region.

In this embodiment of this application, a computing device may obtain the three-dimensional texture model of the target region based on the satellite remote sensing data and the video data within the preset range of the spatial coordinates of the to-be-measured object. Because costs and difficulty of obtaining the satellite remote sensing data and the video data within the preset range of the spatial coordinates of the to-be-measured object are low, and there is no need to capture an image by using a low-altitude drone, the method in this embodiment of this application can reduce costs and difficulty of constructing the three-dimensional texture model of the city. In addition, in this embodiment of this application, the computing device may update the three-dimensional texture model of the city based on latest satellite remote sensing data and video data within the preset range of the spatial coordinates of the to-be-measured object, so that costs and difficulty of updating the three-dimensional texture model of the city can be reduced.

With reference to the first aspect, in some implementations of the first aspect, the method further includes: obtaining at least one target texture image of the to-be-measured object from the at least one video image, where each target texture image is determined based on one video image; determining, based on spatial coordinates of the video image corresponding to each target texture image, spatial coordinates corresponding to each target texture image; and determining the surface texture of the to-be-measured object based on the spatial coordinates of the to-be-measured object and the spatial coordinates corresponding to each target texture image.

In this embodiment of this application, the computing device may obtain the target texture image of the to-be-measured object from the video data within the preset range of the spatial coordinates of the to-be-measured object, and synthesize the surface texture of the to-be-measured object based on the target texture image. Because a manner of obtaining the target texture image is simple and costs are low, difficulty and costs of determining the surface texture of the to-be-measured object can be reduced.

With reference to the first aspect, in some implementations of the first aspect, the method further includes: obtaining at least one texture image of one or more objects from the at least one video image, where one texture image of each object is determined based on one video image, each texture image is used to determine one first feature vector, and the first feature vector indicates a feature of the texture image; and determining the at least one target texture image from the at least one texture image of the one or more objects based on a similarity between a second feature vector and each first feature vector. The second feature vector indicates an image feature of the to-be-measured object in the three-dimensional framework model.

In this embodiment of this application, the computing device may determine, based on the similarity between the feature vector of the texture image and the feature vector of the image of the to-be-measured object, which texture images are the texture image of the to-be-measured object, to facilitate synthesis of the surface texture of the to-be-measured object.

With reference to the first aspect, in some implementations of the first aspect, a type of each object is the same as a type of the to-be-measured object.

In this embodiment of this application, the computing device needs to calculate only a feature vector of a texture image of an object whose type is the same as that of the to-be-measured object, and does not need to calculate the feature vector of each texture image of each object, so that calculation overheads can be reduced and efficiency of constructing the three-dimensional texture model of the to-be-measured object can be improved.

With reference to the first aspect, in some implementations of the first aspect, the method further includes: segmenting each video image in the at least one video image by using an object as a unit, to obtain at least one object texture image of each object; and adjusting an angle of view of each object texture image of each object, to obtain each texture image of each object, where each texture image is a front view.

In this embodiment of this application, the computing device may adjust an angle of view of a physical texture image that is directly obtained through segmentation from the video image, so that all texture images obtained during subsequent surface texture synthesis are front views, to avoid distortion of the synthesized surface texture of the to-be-measured object.

With reference to the first aspect, in some implementations of the first aspect, the method further includes: generating a three-dimensional texture model of the to-be-measured object in target grid space based on a surface texture and a three-dimensional framework model of the to-be-measured object in the target grid space, where the target grid space is three-dimensional space corresponding to a target grid, a grid plane on which the target grid is located is parallel to a ground in the three-dimensional framework model, and the target grid is any grid on the grid plane.

In this embodiment of this application, the computing device may construct a three-dimensional texture model for each object in each grid space in a unit of grid space, so that the three-dimensional texture model of the city can be generated based on the three-dimensional texture model of each object in each grid space.

With reference to the first aspect, in some implementations of the first aspect, the method further includes: determining a location of each target texture image on a surface of the to-be-measured object based on the spatial coordinates of the to-be-measured object and the spatial coordinates corresponding to each target texture image; and attaching the at least one target texture image to the surface of the to-be-measured object based on the location of each target texture image on the surface of the to-be-measured object, to synthesize the surface texture of the to-be-measured object.

In this embodiment of this application, the computing device may determine a mapping relationship between the surface of the to-be-measured object and the target texture image based on the spatial coordinates of the to-be-measured object and the spatial coordinates of each target texture image, to synthesize the surface texture of the to-be-measured object, and generate the three-dimensional texture model of the to-be-measured object.

With reference to the first aspect, in some implementations of the first aspect, the method further includes: determining, based on the spatial coordinates and a resolution of the video image corresponding to each target texture image and size information of each target texture image in the corresponding video image, the spatial coordinates corresponding to each target texture image.

With reference to the first aspect, in some implementations of the first aspect, the video data is obtained by at least one of the following imaging devices: a road surface checkpoint imaging device, and a ground handheld imaging device.

In this embodiment of this application, the computing device may determine the surface texture of the to-be-measured object based on the video image photographed by the road surface checkpoint imaging device or the ground handheld imaging device. Because difficulty and costs of obtaining the video image photographed by the road surface checkpoint imaging device or the ground handheld imaging device are low, difficulty and costs of constructing the three-dimensional texture model of the to-be-measured object can be reduced. In addition, costs and difficulty of updating the three-dimensional texture model of the to-be-measured object are also low. Therefore, the three-dimensional texture model of the to-be-measured object can be updated in a more timely manner.

With reference to the first aspect, in some implementations of the first aspect, the type of the to-be-measured object includes at least one of the following: a building, a tree, a bridge, or a road.

According to a second aspect, a computing apparatus is provided. The computing apparatus includes units configured to implement any one of the first aspect or the possible implementations of the first aspect.

According to a third aspect, a computing device cluster is provided, including at least one computing device, where each computing device includes a processor and a memory. The processor of the at least one computing device is configured to execute instructions stored in the memory of the at least one computing device, so that the computing device cluster performs the method according to any one of the first aspect or the possible implementations of the first aspect.

According to a fourth aspect, a chip is provided. The chip obtains instructions and executes the instructions to implement the method according to any one of the first aspect or the possible implementations of the first aspect.

Optionally, in an implementation, the chip includes a processor and a data interface. The processor reads, through the data interface, instructions stored in a memory, to perform the method according to any one of the first aspect or the possible implementations of the first aspect.

Optionally, in an implementation, the chip may further include the memory. The memory stores the instructions. The processor is configured to execute the instructions stored in the memory. When the instructions are executed, the processor is configured to perform the method according to any one of the first aspect or the possible implementations of the first aspect.

According to a fifth aspect, a computer program product including instructions is provided. When the instructions are run by a computing device cluster, the computing device cluster is enabled to perform the method according to any one of the first aspect or the possible implementations of the first aspect.

According to a sixth aspect, a computer-readable storage medium is provided, including computer program instructions, and when the computer program instructions are executed by a computing device cluster, the computing device cluster is enabled to perform the method according to any one of the first aspect or the possible implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a nonvolatile storage medium.

### BRIEF DESCRIPTION OF DRAWINGS

FIG. 1 is a block diagram of a structure of a system for generating a three-dimensional texture model of a city based on composite data according to an embodiment of this application;
FIG. 2 is a schematic flowchart of a method for generating a three-dimensional texture model of a city based on composite data according to an embodiment of this application;
FIG. 3 is a schematic flowchart of a method for generating a three-dimensional texture model of a city based on composite data according to another embodiment of this application;
FIG. 4 is a diagram of a three-dimensional framework model of a to-be-measured object according to an embodiment of this application;
FIG. 5 is a diagram of a video image according to an embodiment of this application;
FIG. 6 is a diagram of object texture images of a plurality of objects according to an embodiment of this application;
FIG. 7 is a diagram of a texture image of an object according to an embodiment of this application;
FIG. 8 is a diagram of spatial coordinates corresponding to a target texture image of an object according to an embodiment of this application;
FIG. 9A and FIG. 9B are a schematic flowchart of a method for generating a three-dimensional texture model of a city based on composite data according to an embodiment of this application;
FIG. 10 is a block diagram of a structure of a computing apparatus according to an embodiment of this application;
FIG. 11 is a block diagram of a structure of a computing device according to an embodiment of this application;
FIG. 12 is a block diagram of a structure of a computing device cluster according to an embodiment of this application; and
FIG. 13 is a diagram in which computing devices 1000A and 1000B are connected through a network according to an embodiment of this application.

### DESCRIPTION OF EMBODIMENTS

The following describes technical solutions of embodiments in this application with reference to accompanying drawings.

Technical solutions in embodiments of this application may be applied to constructing or updating a three-dimensional texture model of a city, or may be applied to constructing or updating a three-dimensional texture model of a campus, a navigation map, or the like. The technical solutions in embodiments of this application may be applied to various computing devices. The computing device may be, for example, a server, a desktop computer, a notebook computer, a palmtop computer, or a portable computing device. This is not limited in embodiments of this application. The server may be, for example, a cloud server or a local server. This is not limited in embodiments of this application. The technical solutions in embodiments of this application may be further applied to various cloud scenarios.

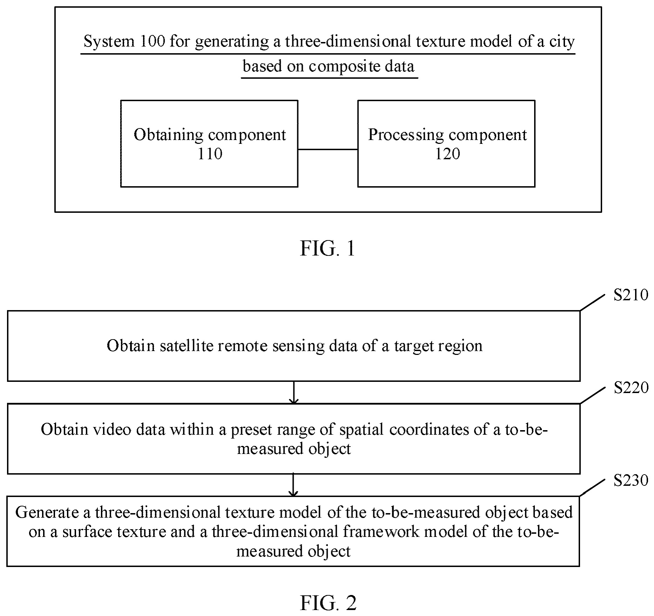

FIG. 1 is a block diagram of a structure of a system 100 for generating a three-dimensional texture model of a city based on composite data according to an embodiment of this application. The system 100 in FIG. 1 includes an obtaining component 110 and a processing component 120.

The obtaining component 110 may obtain satellite remote sensing data of a target region. The target region is any region in at least one region of the city. The satellite remote sensing data includes image data of a to-be-measured object in the target region, and the image data is used to determine a three-dimensional framework model and spatial coordinates of the to-be-measured object. The to-be-measured object is a current modeling body. The to-be-measured object is an object in three-dimensional space.

In some embodiments, the satellite remote sensing data may include a digital orthophoto map (digital orthophoto map, DOM) and a digital surface model (digital surface model, DSM). The DOM data indicates a size of each object in the city in a first direction. The DSM data indicates a size of each object in the city in a second direction. The first direction is a direction parallel to a ground of the city, and the second direction is a direction perpendicular to the ground of the city.

In some embodiments, a three-dimensional framework model of the city may be obtained based on the satellite remote sensing data. The three-dimensional framework model of the city indicates sizes of objects in the city in the first direction and the second direction. The size of the object may include information like a length, a width, a height, a diameter, a radius, a side length, an area, and a volume. The ground in the three-dimensional framework model corresponds to the ground of the city.

In some embodiments, the to-be-measured object is any one of the at least one object in the target region. The object in the city may be, for example, a building, a tree, a bridge, or a road.

In some embodiments, the satellite remote sensing data may be directly obtained in a manner like through a network, and does not need to be obtained by using an oblique photography technology, so that costs and difficulty of constructing the three-dimensional texture model of the city can be reduced.

The obtaining component 110 may further obtain video data within a preset range of the spatial coordinates of the to-be-measured object. The video data includes at least one video image including the to-be-measured object, and the at least one video image is used to determine a surface texture of the to-be-measured object.

The preset range is not limited in this embodiment of this application. For example, the preset range may be determined based on a distance between an imaging device around the to-be-measured object and the to-be-measured object. Alternatively, the preset range may be determined based on information like definition of video data obtained by an imaging device around the to-be-measured object or a size of the to-be-measured object in the video data.

In some embodiments, the video data within the preset range of the spatial coordinates of the to-be-measured object is obtained by at least one of the following imaging devices: a road surface checkpoint imaging device, and a ground handheld imaging device.

In some embodiments, a video and/or an image obtained by the road surface checkpoint imaging device or the ground handheld imaging device in the city may be uploaded to a road surface video database of the city. In other words, the road surface video database stores at least one video and/or image, and each of the at least one video and/or image may be obtained by one imaging device in the city.

In some embodiments, the road surface video database may further store spatial coordinates of each imaging device. Alternatively, the road surface video database may further store and obtain spatial coordinates of a location of each video and/or image.

In some embodiments, video data in the road surface video data may be directly obtained in a manner like through a network, and does not need to be obtained by using an oblique photography technology, so that costs and difficulty of constructing the three-dimensional texture model of the city can be reduced.

The processing component 120 may generate a three-dimensional texture model of the to-be-measured object based on the surface texture and the three-dimensional framework model of the to-be-measured object, where the three-dimensional texture model of the to-be-measured object is used to generate a three-dimensional texture model of the target region.

In some embodiments, the processing component 120 may obtain at least one target texture image of the to-be-measured object from the at least one video image, where each target texture image is determined based on one video image. The processing component 120 may further determine, based on spatial coordinates of the video image corresponding to each target texture image, spatial coordinates corresponding to each target texture image. The processing component 120 may further determine the surface texture of the to-be-measured object based on the spatial coordinates of the to-be-measured object and the spatial coordinates corresponding to each target texture image.

In some embodiments, the processing component 120 may obtain at least one texture image of one or more objects from the at least one video image, where one texture image of each object is determined based on one video image. Each texture image is used to determine one first feature vector, and the first feature vector indicates a feature of the texture image. The processing component 120 may further determine the at least one target texture image from the at least one texture image of the one or more objects based on a similarity between a second feature vector and each first feature vector. The second feature vector indicates an image feature of the to-be-measured object in the three-dimensional framework model.

In some embodiments, the feature of the image (or the image feature) includes any one or more of a color feature of the image, a texture feature of the image, a shape feature of the image, or a spatial relationship feature of the image. The color feature of the image is used to describe a color of the image, and the texture feature of the image is used to describe a texture of the image. The shape feature of the image is used to describe a contour of the image and/or a shape of the image. The spatial relationship feature of the image is used to describe a spatial location relationship and/or a relative direction relationship between a plurality of regions included in the image. The feature vector of the image may indicate any one or more of a color feature, a texture feature, a shape feature, or a spatial relationship feature of the image. The feature vector of the image may be determined based on a pixel value of each pixel in the image.

In some embodiments, a type of the one or more objects is the same as a type of the to-be-measured object. To be specific, after determining one or more objects of a same type as the to-be-measured object, the processing component 120 may calculate a first feature vector of each texture image of the one or more objects, to avoid calculating a feature vector of a texture image of an object that is of a type different from the to-be-measured object, so that computing resources can be saved.

In some embodiments, the type of the object may include a building, a tree, a bridge, a road, or the like. For example, if both two objects are buildings, the processing component 120 may determine that types of the two objects are the same.

In some embodiments, the type of the object may indicate a feature of the object. The feature of the object may include at least one of the following: a shape of the object, a size of the object, a name of the object, and the like. The name of the object is not limited in this embodiment of this application, and may be set based on an actual situation. For example, the name of the object may include a building, a tree, a bridge, a road, and the like. Alternatively, the name of the object may include a first building, a second building, a first type of tree, a second type of tree, or the like.

For example, if shapes of two objects are the same, the processing component 120 may determine that types of the two objects are the same. Alternatively, if sizes of two objects are the same, the processing component 120 may determine that types of the two objects are the same. Alternatively, if names of two objects are the same, the processing component may determine that types of the two objects are the same. Alternatively, if both shapes and sizes of two objects are the same, the processing component 120 may determine that types of the two objects are the same. Alternatively, if both sizes and names of two objects are the same, the processing component 120 may determine that types of the two objects are the same. Alternatively, if both shapes and names of two objects are the same, the processing component 120 may determine that types of the two objects are the same. Alternatively, if shapes, sizes, and names of two objects are the same, the processing component 120 may determine that types of the two objects are the same.

In some embodiments, meanings of "object" and "body" are similar. Meanings of "type of an object", "semantic of an object", "type of a body", and "semantic of a body" are similar.

In some embodiments, the processing component 120 may generate a three-dimensional texture model of the to-be-measured object in target grid space based on a surface texture and a three-dimensional framework model of the to-be-measured object in the target grid space. The target grid space is three-dimensional space corresponding to a target grid, a grid plane on which the target grid is located is parallel to a ground in the three-dimensional framework model, and the target grid is any grid on the grid plane. In other words, the three-dimensional framework model may include at least one grid plane, and each grid plane is parallel to the ground in the three-dimensional framework model. Each grid plane may include at least one grid. The target grid plane is any one of the at least one grid plane, and the target grid is any grid on the target grid plane. A size of the target grid space in the second direction is not limited, and a size of the target grid space in the first direction is the size of the target grid. In other words, the target grid space is cuboid space whose height is not limited in the second direction, and an area of a section of the cuboid space in the first direction is the same as an area of the target grid.

When the processing component 120 generates the three-dimensional texture model of the to-be-measured object in the target grid space, the second feature vector may indicate an image feature of the to-be-measured object in the target grid space in the three-dimensional framework model.

In some embodiments, the processing component 120 may segment each video image in the at least one video image by using an object as a unit, to obtain at least one object texture image of each object. The processing component 120 may further adjust an angle of view of each object texture image of each object, to obtain each texture image of each object. Each texture image of each object is a front view. The angle of view of each object texture image of each object is adjusted, so that distortion of the subsequently determined surface texture of the to-be-measured object can be avoided, and distortion of the finally obtained three-dimensional texture model of the to-be-measured object can be further avoided.

In some embodiments, the processing component 120 may determine a location of each target texture image on a surface of the to-be-measured object based on the spatial coordinates of the to-be-measured object and the spatial coordinates corresponding to each target texture image. The processing component 120 may further attach the at least one target texture image to the surface of the to-be-measured object based on the location of each target texture image on the surface of the to-be-measured object, to synthesize the surface texture of the to-be-measured object.

In some embodiments, the processing component 120 may determine, based on the spatial coordinates and a resolution of the video image corresponding to each target texture image and size information of each target texture image in the corresponding video image, the spatial coordinates corresponding to each target texture image.

The system 100 may obtain the three-dimensional texture model of the target region based on the satellite remote sensing data and the video data within the preset range of the spatial coordinates of the to-be-measured object. Because costs and difficulty of obtaining the satellite remote sensing data and the video data within the preset range of the spatial coordinates of the to-be-measured object are low, and there is no need to capture an image by using a low-altitude drone, the system 100 can reduce costs and difficulty of constructing the three-dimensional texture model of the city. In addition, the system 100 may update the three-dimensional texture model of the city based on latest satellite remote sensing data and video data within the preset range of the spatial coordinates of the to-be-measured object, so that costs and difficulty of updating the three-dimensional texture model can be reduced.

FIG. 2 is a schematic flowchart of a method for generating a three-dimensional texture model of a city based on composite data according to an embodiment of this application. The method in FIG. 2 includes the following steps.

S210: Obtain satellite remote sensing data of a target region.

The target region is any region in at least one region of the city. Division of regions in the city is not limited in this embodiment of this application. For example, at least one region of the city may be determined based on an administrative partition of the city, or at least one region of the city may be determined based on a preset size. The target region includes at least one object, and each object may be, for example, a building, a tree, a bridge, or a road. The to-be-measured object is any one of the at least one object. In other words, the to-be-measured object is an object in three-dimensional space. The satellite remote sensing data includes image data of a to-be-measured object in the target region, and the image data is used to determine a three-dimensional framework model and spatial coordinates of the to-be-measured object.

Optionally, the satellite remote sensing data may include DOM data. The DOM data may indicate a size of the to-be-measured object in a first direction, and the first direction is a direction parallel to a ground of the city. The size of the to-be-measured object in the first direction may be information like a length, a width, a radius, a diameter, a side length, and an area of the to-be-measured object in the first direction.

In some embodiments, a computing device may directly obtain the DOM data. Alternatively, the computing device may generate the DOM data based on the satellite remote sensing data. This is not limited in this embodiment of this application.

Optionally, the satellite remote sensing data may further include DSM data. The DSM data may indicate a size of the to-be-measured object in a second direction, and the second direction is a direction perpendicular to the ground of the city. The size of the to-be-measured object in the second direction may be information like a length, a width, a radius, a diameter, a side length, and an area of the to-be-measured object in the second direction.

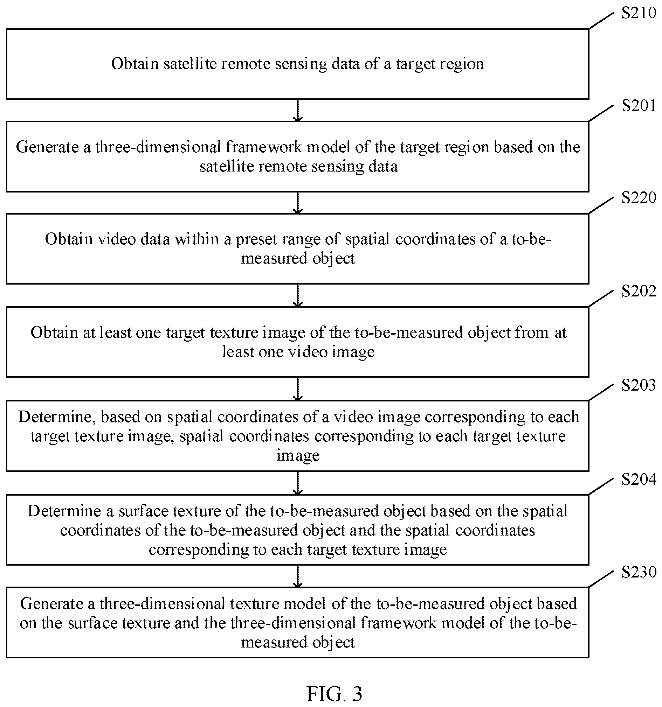

Optionally, after obtaining the satellite remote sensing data of the target region, the computing device may perform step S201 in FIG. 3.

FIG. 3 is a schematic flowchart of a method for generating a three-dimensional texture model of a city based on composite data according to an embodiment of this application. The method in FIG. 3 includes the following steps.

S201: Generate a three-dimensional framework model of the target region based on the satellite remote sensing data.

The computing device may further determine spatial coordinates of each object in the target region based on the satellite remote sensing data. For example, the computing device may determine the spatial coordinates of each object in the target region based on longitude and latitude information included in the satellite remote sensing data. Alternatively, the computing device may determine a distance between each object in the target region and a preset location based on the satellite remote sensing data, to determine the spatial coordinates of each object. The preset location may be used as an origin in the three-dimensional framework model of the target region.

After determining the spatial coordinates of each object in the target region, the computing device may determine the three-dimensional framework model of the target region based on the spatial coordinates of each object. The three-dimensional framework model of the target region includes a three-dimensional framework model of each object in the target region.

A specific method for representing the spatial coordinates of the object is not limited in this embodiment of this application. For example, the spatial coordinates of the object may be represented by spatial coordinates of at least two vertices of the object. Alternatively, the spatial coordinates of the object may be represented by spatial coordinates of a center (or a center of gravity) of the object and sizes of the object in the first direction and the second direction. Alternatively, the spatial coordinates of the object may be represented in a form of a function, a matrix, an array, or the like. Alternatively, the spatial coordinates of the object may be represented by spatial coordinates of each point on each surface of the object.

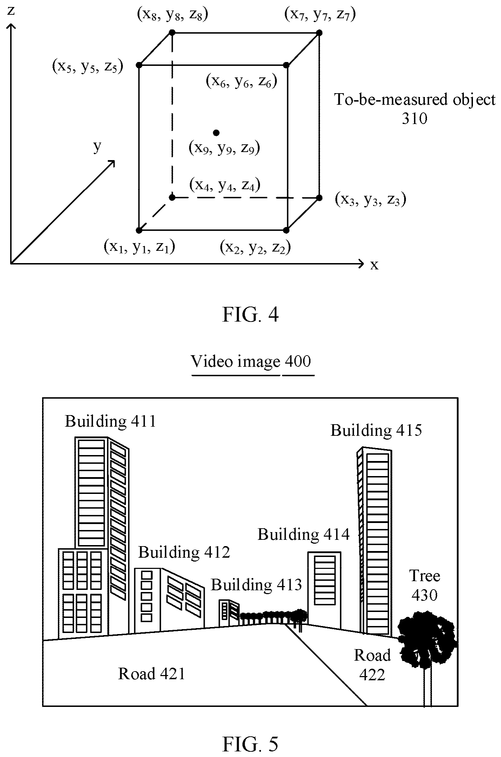

For example, the three-dimensional framework model of the to-be-measured object determined based on the satellite remote sensing data is shown in FIG. 4.

FIG. 4 is a diagram of a three-dimensional framework model of a to-be-measured object according to an embodiment of this application. The to-be-measured object 310 in FIG. 4 is a cuboid. In FIG. 4, a plane formed by x=0 and y=0 is a ground of a city. As shown in FIG. 4, spatial coordinates of four vertices that are of the to-be-measured object 310 and that are close to the ground are respectively (x₁, y₁, z₁), (x₂, y₂, z₂), (x₃, y₃, z₃) and (x₄, y₄, z₄), and spatial coordinates of four vertices that are of the to-be-measured object 310 and that are away from the ground are respectively (x₅, y₅*,* z₅)*,* (x₆, y₆, z₆), (x₇, y₇, z₇) and (x₈, y₈, z₈). Spatial coordinates of a center of the to-be-measured object 310 are (x₉, y₉, z₉). An origin in FIG. 4 is not limited in this embodiment of this application. For example, the origin in FIG. 4 may be a preset location in the city.

Specifically, *x*₁ = *x*₄ = *x*₅ = *x*₈ < *x*₂ = *x*₃ = *x*₆ *= x*₇, *y*₁ *= y*₂ *= y*₅ *= y*₆ *< y*₃ *= y*₄ *= y*₇ *= y*₈, and*z*₁ = *z*₂ = *z*₃ = *z*₄ < *z*₅ = *z*₆ = *z*₇ = *z*₈.

It can be learned from FIG. 4 that the three-dimensional framework model of the to-be-measured object may indicate a size of the to-be-measured object 310 in the first direction and a size of the to-be-measured object 310 in the second direction. For example, a length of the to-be-measured object 310 in the first direction is *x*₂ - *x*₁, a width of the to-be-measured object 310 in the first direction is *y*₃ - *y*₂, and a height of the to-be-measured object 310 in the second direction is *z*₅ - *z*₁. It can be further learned from FIG. 4 that the three-dimensional framework model of the to-be-measured object cannot indicate a surface texture of each surface of the to-be-measured object 310.

S220: Obtain video data within a preset range of the spatial coordinates of the to-be-measured object.

The video data includes at least one video image including the to-be-measured object, and the at least one video image is used to determine a surface texture of the to-be-measured object.

Optionally, the computing device may determine, based on the spatial coordinates of the to-be-measured object, at least one imaging device within the preset range of the spatial coordinates of the to-be-measured object. The computing device may further obtain a video and/or an image photographed by the at least one imaging device, to obtain the video data within the preset range of the spatial coordinates of the to-be-measured object.

In some embodiments, the computing device may obtain spatial coordinates of each imaging device in the city, to determine, based on a distance between each imaging device and the to-be-measured object, at least one imaging device within the preset range of the spatial coordinates of the to-be-measured object.

Optionally, the computing device may directly obtain a road surface video database of the city, and determine, from the road surface video database, the video data within the preset range of the spatial coordinates of the to-be-measured object. The road surface video database includes at least one video and/or image. Each video and/or image in the road surface video database is obtained by one imaging device in the city.

In some embodiments, the road surface video data further includes spatial coordinates information. The spatial coordinates information includes spatial coordinates of an imaging device that obtains the at least one video and/or image. Alternatively, the spatial coordinates information includes obtaining spatial coordinates of a location of each video and/or image. The computing device may determine the video data within the preset range of the spatial coordinates of the to-be-measured object based on information about the spatial coordinates in the road surface video database.

In some embodiments, the imaging device in the city includes at least one of the following: a road surface checkpoint imaging device and a ground handheld imaging device.

In some embodiments, the preset range may be determined based on a distance between an imaging device around the to-be-measured object and the to-be-measured object. Alternatively, the preset range may be determined based on information like definition of video data obtained by an imaging device around the to-be-measured object or a size of the to-be-measured object in the video data. A specific manner of determining the preset range and a size of the preset range are not limited in this embodiment of this application.

For example, it is assumed that the spatial coordinates of the to-be-measured object are shown in FIG. 4. The preset range of the spatial coordinates of the to-be-measured object may be a spherical range that uses spatial coordinates of a vertex (or a center) of the to-be-measured object 310 as a center and has a radius of r₁. Alternatively, the preset range of the spatial coordinates of the to-be-measured object 310 may be a cylindrical range that uses spatial coordinates of a vertex (or a center) of the to-be-measured object 310 as a center, has a radius of r₂ in the first direction, and has a height of h₁ in the second direction. r₁, r₂, and h₁ are numbers greater than 0, and may be the same or different.

In some embodiments, the video data within the preset range of the spatial coordinates of the to-be-measured object is video data within a preset time range. The preset time range is not limited in this embodiment of this application. For example, a minimum value in the preset time range may be a preset moment -a, and a maximum value in the preset time range may be a preset moment +a. a is a first preset threshold, and the preset moment and a value of a are not limited in this embodiment of this application. A smaller value of a indicates a smaller change in an illumination situation in a finally constructed three-dimensional texture model of the city. A larger value of a indicates a larger change in an illumination situation in a finally constructed three-dimensional texture model of the city.

Optionally, after obtaining the video data within the preset range of the spatial coordinates of the to-be-measured object, the computing device may perform step S202 in FIG. 3.

S202: Obtain at least one target texture image of the to-be-measured object from the at least one video image.

Each target texture image in the at least one target texture image is determined based on one video image. The at least one video image is a video image included in the video data within the preset range of the spatial coordinates of the to-be-measured object.

Optionally, each video image in the at least one video image includes an object texture image of at least one object. In other words, each video image includes an object texture image of at least one object. The computing device may segment each video image by using an object as a unit, to obtain each object texture image of each object. One object texture image of each object is determined based on one video image.

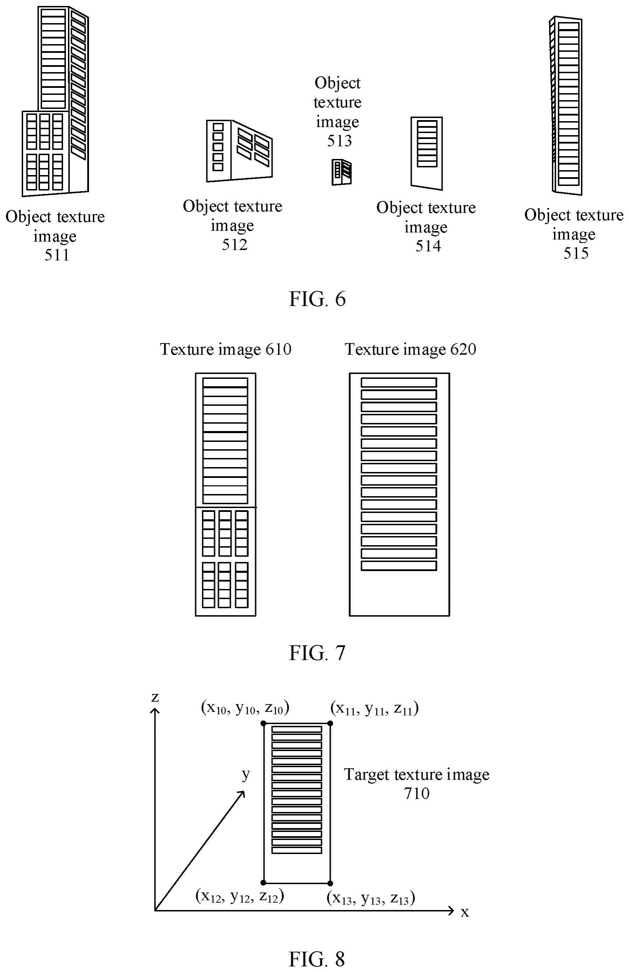

For example, it is assumed that a video image is shown in FIG. 5. FIG. 5 is a diagram of a video image according to an embodiment of this application. The video image 400 in FIG. 5 includes object texture images of a building 411, a building 412, a building 413, a building 414, a building 415, a road 421, a road 422, and a plurality of trees 430. In other words, the video image 400 includes the object texture images of the buildings 411 to 415, the road 421, the road 422, and the plurality of trees 430. The computing device segments each object in the video image 400, to obtain an object texture image of each object. For example, after the video image 400 is segmented, the object texture images of the buildings 411 to 415 are shown in FIG. 6.

FIG. 6 is a diagram of object texture images of a plurality of objects according to an embodiment of this application. In FIG. 6, an object texture image 511, an object texture image 512, an object texture image 513, an object texture image 514, and an object texture image 515 are included. The object texture image 511 is an object texture image of the building 411 in FIG. 5. The object texture image 512 is an object texture image of the building 412 in FIG. 5. The object texture image 513 is an object texture image of the building 413 in FIG. 5. The object texture image 514 is an object texture image of the building 414 in FIG. 5. The object texture image 515 is an object texture image of the building 415 in FIG. 5.

A specific segmentation method is not limited in this embodiment of this application. For example, the computing device may segment each object in the video image based on a method like a threshold segmentation method, an edge segmentation method, a region segmentation method, or a morphological segmentation method. Alternatively, the computing device may segment each object in the video image based on a computing model like deep learning or a neural network.

Optionally, because the imaging device has an oblique angle during photographing, after each object in the video image obtained by the imaging device is segmented, each obtained object texture image of each object is a non-front view, as shown in FIG. 6. A three-dimensional texture model generated based on an object texture image in a non-front view is severely distorted. Therefore, the computing device may adjust an angle of view of the object texture image of each object, to obtain one or more texture images of each object. Each texture image of each object is a front view.

A specific method of adjusting the angle of view is not limited in this embodiment of this application. For example, the computing device may adjust the angle of view of the object texture image based on an image processing method like perspective transformation or affine transformation. Alternatively, the computing device may adjust the angle of view of the object texture image based on a computing model like deep learning or a neural network.

For example, it is assumed that the angle of view of the object texture image 511 in FIG. 6 is adjusted, and a texture image shown in FIG. 7 may be obtained. FIG. 7 is a diagram of a texture image of an object according to an embodiment of this application. A texture image 610 and a texture image 620 in FIG. 7 are images obtained by adjusting the angle of view of the object texture image 511 in FIG. 6. The texture image 610 is a front view using a first side plane of the building 411 as an angle of view, and the first side plane of the building 411 is a side plane that is of the building 411 and that faces a screen. The texture image 620 is a front view using a second side plane of the building 411 as the angle of view, and the second side plane of the building 411 is a side plane that is of the building 411 and that faces the road 421.

It can be learned from FIG. 7 that one or more texture images of each object may be obtained after the angle of view of the object texture image of each object is adjusted. The one or more texture images may be front views of different angles of view.

When the object texture image of the object is a front view, there is no need to adjust the angle of view of the object texture image. The computing device may directly use the object texture image as the texture image of the object.

Optionally, the computing device may directly obtain at least one texture image of one or more objects from the at least one video image. One texture image of each object is determined based on one video image.

In some embodiments, the computing device may input each video image into a first image processing model, to obtain the at least one texture image of the one or more objects. The first image processing model may be a model obtained through deep learning training based on a first training dataset. The first training dataset may include at least one video image, at least one texture image, and a mapping relationship between the at least one video image and the at least one texture image.

In some embodiments, before step S202, the computing device may obtain a trained first image processing model. Alternatively, before step S202, the computing device may obtain the first training dataset, and train a model based on the first training dataset, to obtain the trained first image processing model.

Optionally, the computing device may determine a first feature vector of each texture image based on each texture image of each object. In other words, each texture image is used to determine one first feature vector. The first feature vector indicates a feature of a texture image corresponding to the first feature vector.

A manner of determining the first feature vector of each texture image is not limited in this embodiment of this application. For example, the computing device may determine the first feature vector of each texture image by using a feature extraction model. The feature extraction model may be a model obtained through deep learning training based on a second training dataset. The second training dataset may include at least one texture image, at least one first feature vector, and a mapping relationship between the at least one texture image and the at least one first feature vector.

In some embodiments, before step S202, the computing device may obtain a trained feature extraction model. Alternatively, before step S202, the computing device may obtain the second training dataset, and train a model based on the second training dataset, to obtain the trained feature extraction model.

Optionally, the computing device may determine a second feature vector of the to-be-measured object, where the second feature vector indicates an image feature of the to-be-measured object in the three-dimensional framework model. In other words, the computing device may determine the second feature vector based on the image of the to-be-measured object in the three-dimensional framework model. A specific manner in which the computing device determines the second feature vector is similar to a manner in which the computing device determines the first feature vector. Details are not described herein.

For example, the three-dimensional framework model may include at least one grid plane, and each grid plane is parallel to the ground in the three-dimensional framework model. Each grid plane may include at least one grid. The computing device may determine any one of the at least one grid plane as a target grid plane, and determine any grid on the target grid plane as a target grid. Three-dimensional space corresponding to the target grid is target grid space, and the target grid space includes at least one object. The to-be-measured object is any one of the at least one object. The target grid space is cuboid space whose height is not limited in the second direction, and an area of a section of the cuboid space in the first direction is the same as an area of the target grid. The first direction is a direction parallel to the ground, and the second direction is a direction perpendicular to the ground.

In some embodiments, the computing device may generate a three-dimensional texture model of the to-be-measured object in the target grid space based on a surface texture and a three-dimensional framework model of the to-be-measured object in the target grid space. To be specific, the computing device may establish a three-dimensional texture model in each grid space by using a grid in the target grid plane as a unit, to establish the three-dimensional texture model of the city based on the three-dimensional texture model in each grid space.

For example, the computing device may obtain the image in the target grid space, and segment each object in the image in the target grid, to obtain an image of the to-be-measured object in the target grid space. The computing device may further obtain the second feature vector based on the image of the to-be-measured object in the target grid space. The second feature vector may indicate an image feature of the to-be-measured object in the target grid space in the three-dimensional framework model.

In some embodiments, the target region may include one or more target grid space.

Optionally, the computing device may determine the at least one target texture image of the to-be-measured object from the at least one texture image of the one or more objects based on a similarity between the second feature vector of the to-be-measured object and each first feature vector. In other words, the computing device may determine one or more texture images of the to-be-measured object from the at least one texture image based on a similarity between feature vectors, and use the texture image of the to-be-measured object as the target texture image.

When a degree of the similarity between the first feature vector and the second feature vector is greater than or equal to a second preset threshold, the computing device may determine that the texture image corresponding to the first feature vector is the target texture image of the to-be-measured object. When a degree of the similarity between the first feature vector and the second feature vector is less than a second preset threshold, the computing device may determine the texture image corresponding to the first feature vector is not the target texture image of the to-be-measured object. The second preset threshold may be a specific value, for example, may be 3.5, 5, or 60. A value of the second preset threshold is not limited in this embodiment of this application. Alternatively, the second preset threshold may be a level or a type, for example, may be a higher level, a first level, or a high level. This is not limited in this embodiment of this application.

A specific manner of determining the similarity between the first feature vector and the second feature vector is not limited in this embodiment of this application. For example, the computing device may determine the similarity between the first feature vector and the second feature vector based on a Euclidean distance, a Manhattan distance, or a Chebyshev distance between the first feature vector and the second feature vector. Alternatively, the computing device may determine the similarity between the first feature vector and the second feature vector by using a similarity calculation model. The similarity calculation model may be a model obtained through deep learning training based on a third training dataset. The third training dataset may include a plurality of feature vectors, a similarity between the plurality of feature vectors, and a mapping relationship between the plurality of feature vectors and the similarity between the plurality of feature vectors.

In some embodiments, before step S202, the computing device may obtain a trained similarity calculation model. Alternatively, before step S202, the computing device may obtain the third training dataset, and train a model based on the third training dataset, to obtain the trained similarity calculation model.

Optionally, before calculating the first feature vector of each texture image, the computing device may determine that the type of the object corresponding to each to-be-calculated texture image is the same as the type of the to-be-measured object, so that only a first feature vector of a texture image of an object whose type is the same as the type of the to-be-measured object needs to be calculated, to reduce calculation overheads.

In some embodiments, the type of the object may indicate a feature of the object. The feature of the object may include at least one of the following: a shape of the object, a size of the object, a name of the object, and the like. The size of the object may include a length, a width, a height, a diameter, a radius, a side length, an area, a volume, and the like of the object. The name of the object is not limited in this embodiment of this application, and may be set based on an actual situation. For example, the name of the object may include a building, a tree, a bridge, a road, and the like. Alternatively, the name of the object may include a first building, a second building, a first type of tree, a second type of tree, or the like.

In some embodiments, that types of objects are the same may be that at least one of shapes of the objects, sizes of the objects, and names of the objects are the same.

Optionally, after obtaining the at least one target texture image of the to-be-measured object, the computing device may further perform step S203 in FIG. 3.

S203: Determine, based on spatial coordinates of the video image corresponding to each target texture image, spatial coordinates corresponding to each target texture image.

In some embodiments, the spatial coordinates of the video image corresponding to each target texture image may be spatial coordinates of an imaging device that photographs the video image. The spatial coordinates of the imaging device may be determined based on a location of the imaging device in the three-dimensional framework model. Alternatively, the spatial coordinates of the imaging device may be determined based on longitude and latitude information of the imaging device.

In some embodiments, the computing device may determine, based on the spatial coordinates of the video image corresponding to each target texture image, a resolution of the video image, and size information of each target texture image in the video image, the spatial coordinates corresponding to each target texture image. The spatial coordinates corresponding to each target texture image include spatial coordinates corresponding to each pixel in the target texture image in the three-dimensional space. For example, the computing device may determine a mapping relationship between at least two vertices of the target texture image and the surface of the to-be-measured object in the three-dimensional space. The at least two vertices may include a vertex at an upper left corner and a vertex at a lower right corner of the target texture image. Alternatively, the at least two vertices may include a vertex at a lower left corner and a vertex at an upper right corner of the target texture image. Alternatively, the at least two vertices may include each vertex of the target texture image. Alternatively, the computing device may determine a mapping relationship between each pixel in the target texture image and the surface of the to-be-measured object in the three-dimensional space.

A specific method for determining the spatial coordinates corresponding to the target texture image is not limited in this embodiment of this application. For example, the computing device may obtain the spatial coordinates corresponding to the target texture image by inputting the video image corresponding to the target texture image, the spatial coordinates and the resolution of the video image, and the target texture image into a spatial coordinates calculation model. The spatial coordinates calculation model may be a model obtained through machine learning training based on a fourth training dataset. The fourth training dataset may include a first dataset and a mapping relationship between the first dataset and the spatial coordinates corresponding to the target texture image. The first dataset includes the video image, the spatial coordinates and the resolution of the video image, and the target texture image.

In some embodiments, before step S203, the computing device may obtain a trained spatial coordinates calculation model. Alternatively, before step S203, the computing device may obtain the fourth training dataset, and train a model based on the fourth training dataset, to obtain the trained spatial coordinates calculation model.

A method for representing the spatial coordinates corresponding to the target texture image is not limited in this embodiment of this application. For example, the spatial coordinates corresponding to the target texture image may be represented in a form of a matrix, an array, a function, or the like. One or more elements in the matrix or the array may be used to represent spatial coordinates corresponding to one pixel.

Optionally, after determining the spatial coordinates of each target texture image, the computing device may further perform step S204 in FIG. 3.

S204: Determine the surface texture of the to-be-measured object based on the spatial coordinates of the to-be-measured object and the spatial coordinates corresponding to each target texture image.

In some embodiments, the computing device may determine a location of each target texture image on the surface of the to-be-measured object based on the spatial coordinates of the to-be-measured object and the spatial coordinates corresponding to each target texture image.

For example, the computing device may determine, based on the spatial coordinates corresponding to each pixel in the target texture image, a location corresponding to each pixel on the surface of the to-be-measured object, so as to determine the location of the target texture image on the surface of the to-be-measured object.

For example, it is assumed that spatial coordinates corresponding to a target texture image are shown in FIG. 8. FIG. 8 is a diagram of spatial coordinates corresponding to a target texture image according to an embodiment of this application. As shown in FIG. 8, spatial coordinates corresponding to four vertices of the target texture image in FIG. 8 are (x₁₀, y₁₀, z₁₀), (x₁₁, y₁₁, z₁₁), (x₁₂, y₁₂, z₁₂), and (x₁₃, y₁₃, z₁₃). Specifically, *x*₁₀ *= x*₁₂ < *x*₁₁ = *x*₁₃, *y*₁₀ = *y*₁₁ *= y*₁₂ = *y*₁₃, and *z*₁₀ = *z*₁₁ > *z*₁₂ = *z*₁₃. In addition, coordinates of each pixel in the target texture image on an x axis are within a range from x₁₀ to x₁₁, coordinates of each pixel in the target texture image on a y axis are y₁₀, and coordinates of each pixel in the target texture image on a z axis are within a range from z₁₂ to z₁₀.

It is assumed that the spatial coordinates of the to-be-measured object are shown in FIG. 4. In addition, it is assumed that *x*₁₀ = *x*₅, *x*₁₁ = *x*₆, *y*₁₀ = *y*₁, *z*₁₀ = *z*₅, and *z*₁₂ = *z*₁. In this case, the computing device may determine, based on the spatial coordinates of the to-be-measured object 310 and the spatial coordinates corresponding to the target texture image 710, that the target texture image 710 is a texture image of an entire surface that is of the to-be-measured object 310 and that faces the screen.

It is assumed that *x*₁₀ = *x*₅, *x*₁₁ *< x*₆, *y*₁₀ = *y*₁, *z*₁₀ *= z*₅, and *z*₁₂ = *z*₁. The computing device may determine, based on the spatial coordinates of the to-be-measured object 310 and the spatial coordinates corresponding to the target texture image 710, that the target texture image 710 is a texture image of a partial surface that is of the to-be-measured object 310 and that faces the screen, and may determine a location of the target texture image 710 on the surface that is of the to-be-measured object 310 and that faces the screen.

In some embodiments, the computing device may attach the at least one target texture image to the surface of the to-be-measured object based on the location of each target texture image on the surface of the to-be-measured object, to synthesize the surface texture of the to-be-measured object. The surface texture of the to-be-measured object indicates at least one pixel value corresponding to the surface of the to-be-measured object.

For example, the pixel value may be a pixel value in a color space like red-green-blue (red-green-blue, RGB) or hue-saturation-value (hue-saturation-value, HSV). Alternatively, the pixel value may include an effect value of at least one light effect. The at least one light effect may include an ambient occlusion (ambient occlusion, AO) effect, a shadow effect, a direct lighting (direct lighting, DI) effect, a reflection effect, a dynamic diffuse global illumination (dynamic diffuse global illumination, DDGI) effect, and the like.

For example, that the computing device attaches the target texture image to the surface of the to-be-measured object includes: The computing device determines, based on the location of each target texture image on the surface of the to-be-measured object, at least one pixel value corresponding to the location. Each pixel value in the at least one pixel value is determined based on a pixel value of one or more pixels.

For example, before attaching the target texture image to the surface of the to-be-measured object, the computing device may perform second image processing on the target texture image, so that a quantity of pixels included in the target texture image matches a spatial size of a location of the surface of the to-be-measured object corresponding to the target texture image.

For example, the second image processing may include at least one of the following: image clipping processing, image merging processing, image scaling processing, image hue adjustment processing, and image noise reduction processing.

For example, it is assumed that the target texture image includes 512×512 pixels, the target texture image corresponds to an entire first surface of the to-be-measured object, and a spatial size of the first surface in the three-dimensional framework model is 256×256 pixels. The first surface is any one of the at least one surface of the to-be-measured object. That the target texture image corresponds to the entire first surface of the to-be-measured object means that a location of a surface of the to-be-measured object corresponding to the target texture image is the entire first surface. The computing device may perform image scaling processing on the target texture image, so that a processed target texture image includes 256×256 pixels. The computing device may further determine a mapping relationship between the 256×256 pixels and the first surface, and determine 256×256 pixel values of the first surface based on the mapping relationship.

For example, it is assumed that a second surface of the to-be-measured object includes a first part and a second part, a spatial size of the first part in the three-dimensional framework model is 128×256 pixels, and a spatial size of the second part in the three-dimensional framework model is 128×256 pixels. In other words, a spatial size of the second surface in the three-dimensional framework model is 256×256 pixels. The first target texture image includes 512×512 pixels, and the first target texture image corresponds to the first part of the second surface of the to-be-measured object. The second target texture image includes 512×512 pixels, and the second target texture image corresponds to the second part of the second surface of the to-be-measured object. The computing device may first perform image merging processing on the first target texture image and the second target texture image to obtain a merged third target texture image. The third target texture image corresponds to the entire second surface. The computing device may further perform scaling processing on the third target texture image, so that a scaled third target texture image includes 256×256 pixels, to determine 256×256 pixel values on the second surface.

Alternatively, the computing device may first separately perform scaling processing on the first target texture image and the second target texture image, and then perform merging processing on a scaled first target texture image and a second target texture image, to obtain a third target texture image. The third target texture image includes 256×256 pixels. The computing device may further determine 256×256 pixel values on the second surface based on pixel values of all pixels in the third target texture image.

In some embodiments, the computing device may directly determine the mapping relationship between the surface of the to-be-measured object and the target texture image based on the spatial coordinates of the to-be-measured object and the spatial coordinates corresponding to each target texture image, to determine the surface texture of the to-be-measured object. For example, the computing device may input the spatial coordinates of the to-be-measured object, the target texture image, and the spatial coordinates corresponding to the target texture image into a surface texture synthesis model, to determine the surface texture of the to-be-measured object. The surface texture synthesis model may include a model obtained through deep learning training based on a fifth training dataset. The fifth training dataset may include a second dataset and a mapping relationship between the second dataset and the surface texture of the to-be-measured object. The second dataset includes the spatial coordinates of the to-be-measured object, the at least one target texture image, and the spatial coordinates corresponding to each target texture image.

In some embodiments, before step S204, the computing device may obtain a trained surface texture synthesis model. Alternatively, before step S204, the computing device may obtain the fifth training dataset, and train a model based on the fifth training dataset, to obtain the trained surface texture synthesis model.

S230: Generate a three-dimensional texture model of the to-be-measured object based on the surface texture and the three-dimensional framework model of the to-be-measured object.

The surface texture of the to-be-measured object may be determined based on the video data within the preset range of the spatial coordinates of the to-be-measured object, and the three-dimensional framework model may be determined based on the satellite remote sensing data of the target region.

Optionally, the computing device may color each surface of the to-be-measured object in the three-dimensional framework model based on the surface texture of the to-be-measured object, to generate the three-dimensional texture model of the to-be-measured object.

Optionally, after determining the three-dimensional texture model of each object in the target region, the computing device may combine the three-dimensional texture models of the objects based on the spatial coordinates of the objects, to generate the three-dimensional texture model of the target region. The computing device may further combine the three-dimensional texture models of the target regions, to generate the three-dimensional texture model of the city.

Optionally, after the three-dimensional texture model of the city is obtained, the method in FIG. 2 may be performed based on latest satellite remote sensing data of the target region and latest video data within the preset range of the spatial coordinates of the to-be-measured object, to update the three-dimensional texture model of the to-be-measured object, and further update the three-dimensional texture model of the city.

The computing device may obtain the three-dimensional texture model of the target region based on the satellite remote sensing data and the video data within the preset range of the spatial coordinates of the to-be-measured object. Because costs and difficulty of obtaining the satellite remote sensing data and the video data within the preset range of the spatial coordinates of the to-be-measured object are low, and there is no need to capture an image by using a low-altitude drone, costs and difficulty of constructing the three-dimensional texture model of the city can be reduced. In addition, the computing device may update the three-dimensional texture model of the city based on latest satellite remote sensing data and video data within the preset range of the spatial coordinates of the to-be-measured object, so that costs and difficulty of updating the three-dimensional texture model can be reduced.

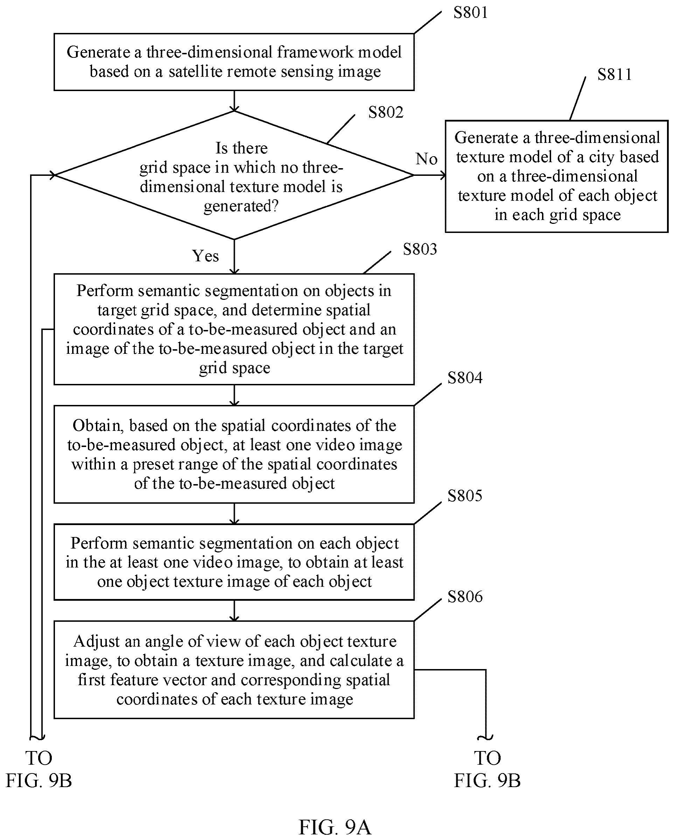

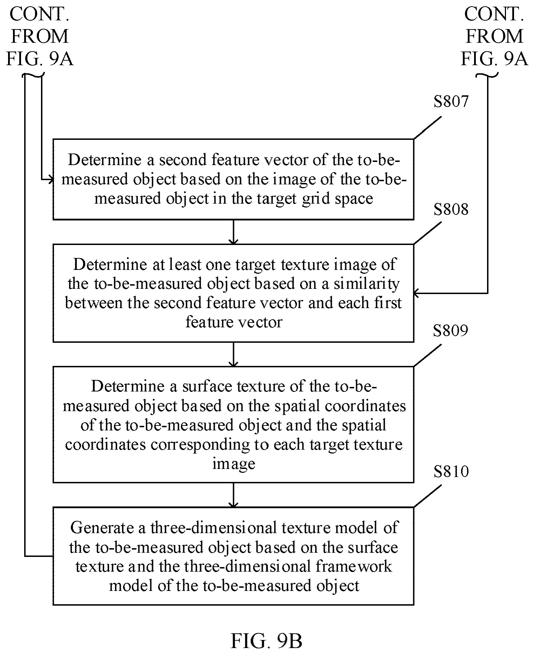

FIG. 9A and FIG. 9B are a schematic flowchart of a method for generating a three-dimensional texture model of a city based on composite data according to an embodiment of this application. FIG. 9A and FIG. 9B include the following steps.

S801: Generate a three-dimensional framework model based on a satellite remote sensing image. A specific implementation of step S801 is similar to an implementation of step S201, and details are not described herein again.

S802: Whether there is grid space in which no three-dimensional texture model is generated.

A computing device may separately construct, based on a target grid plane in the three-dimensional framework model, a three-dimensional texture model of each grid space by using grid space corresponding to a grid in the target grid plane as a unit. The computing device may further combine the three-dimensional texture models of grid space, to generate a three-dimensional texture model of a city.

In some embodiments, the computing device may traverse grid space corresponding to each grid on the target grid plane. If there is grid space in which no three-dimensional texture model is generated, steps S803 to S810 are performed on the grid space, to generate a three-dimensional texture model of the grid space. If there is no grid space in which no three-dimensional texture model is generated, step S811 is performed.

S803: Perform semantic segmentation on objects in the target grid space, and determine spatial coordinates of a to-be-measured object and an image of the to-be-measured object in the target grid space.

The computing device may perform semantic segmentation on the objects in the target grid space, to determine the image of the to-be-measured object in the target grid, and may determine the spatial coordinates of the to-be-measured object. The target grid space is grid space in which a three-dimensional texture model needs to be generated currently. The to-be-measured object is any object in the target grid space.

A specific manner of semantic segmentation is not limited in this embodiment of this application. For example, the computing device may input data in the target grid space into a semantic segmentation model, to obtain an image of each object in the target grid space. The semantic segmentation model may be a model obtained through deep learning training based on a sixth training dataset. The sixth training dataset may include data in the grid space, an image of each object in the grid space, and a mapping relationship between the data in the grid space and the image of each object in the grid space.

In some embodiments, before S803, the computing device may obtain a trained semantic segmentation model. Alternatively, before step S803, the computing device may obtain the sixth training dataset, and train a model based on the sixth training dataset, to obtain the trained semantic segmentation model.

Optionally, the computing device may determine the spatial coordinates of the to-be-measured object based on longitude and latitude information of the to-be-measured object. Alternatively, the computing device may determine the spatial coordinates of the to-be-measured object based on a distance between the to-be-measured object and a preset location.

S804: Obtain, based on the spatial coordinates of the to-be-measured object, at least one video image within a preset range of the spatial coordinates of the to-be-measured object. A specific implementation of step S804 is similar to an implementation of step S220, and details are not described herein again.

S805: Perform semantic segmentation on each object in the at least one video image, to obtain at least one object texture image of each object. For details, refer to the description in step S202.

S806: Adjust an angle of view of each object texture image, to obtain a texture image, and calculate a first feature vector and corresponding spatial coordinates of each texture image. For a specific implementation in which the computing device obtains the texture image and the first feature vector of the texture image, refer to the description in step S202. Details are not described herein again. For a manner in which the computing device determines the spatial coordinates corresponding to each texture image, refer to the description in step S203. Details are not described herein again.

S807: Determine a second feature vector of the to-be-measured object based on the image of the to-be-measured object in the target grid space. For details, refer to the description in step S202.

S808: Determine at least one target texture image of the to-be-measured object based on a similarity between the second feature vector and each first feature vector. For details, refer to the description in step S202.

S809: Determine a surface texture of the to-be-measured object based on the spatial coordinates of the to-be-measured object and the spatial coordinates corresponding to each target texture image. For details, refer to the description in step S204.

S810: Generate a three-dimensional texture model of the to-be-measured object based on the surface texture and the three-dimensional framework model of the to-be-measured object. An implementation of step S810 is similar to an implementation of step S230, and details are not described herein again.

S811: Generate the three-dimensional texture model of the city based on a three-dimensional texture model of each object in each grid space.

When there is no grid space in which no three-dimensional texture model is generated, the computing device may combine the three-dimensional texture model of each object in each grid space based on the spatial coordinates of each object in each grid space, to generate the three-dimensional texture model of the city.

An embodiment of this application may further provide a cloud service. The cloud service may perform the method in FIG. 2, FIG. 3, or FIG. 9A and FIG. 9B based on a requirement of a user, to generate a three-dimensional texture model of a specified region.

Optionally, the cloud service may receive the requirement entered by the user. The requirement entered by the user includes identification information of the specified region, location information of the specified region, or the like. For example, the identification information of the specified region may include a name, a number, or the like of the specified region. The location information of the specified region may include latitude and longitude information of the specified region or information like a center and a radius of the specified region.

In some embodiments, the requirement entered by the user may further include image data, and the image data is used to generate the three-dimensional texture model of the specified region.

Optionally, the cloud service may determine the specified region based on the requirement entered by the user. The cloud service may further generate the three-dimensional texture model of the specified region based on the specified region and the method in FIG. 2, FIG. 3, or FIG. 9A and FIG. 9B.

Optionally, the cloud service may directly display the three-dimensional texture model of the specified region to the user. Alternatively, the cloud service may provide data of the three-dimensional texture model of the specified region for the user, so that the user can store the data of the three-dimensional texture model of the specified region in a local storage device of the user. The data of the three-dimensional texture model of the specified region is used to display the three-dimensional texture model of the specified region on a display device.

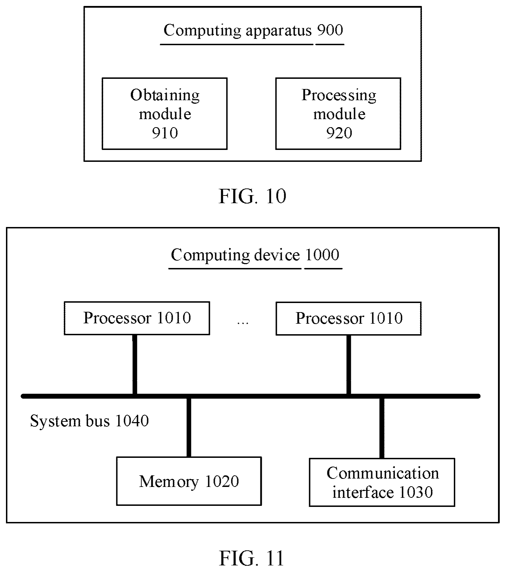

FIG. 10 is a block diagram of a structure of a computing apparatus according to an embodiment of this application. The computing apparatus 900 in FIG. 10 may include an obtaining module 910 and a processing module 920. The computing apparatus 900 may implement the method procedures shown in FIG. 2, FIG. 3, or FIG. 9A and FIG. 9B.

The obtaining module 910 may be configured to obtain satellite remote sensing data of a target region, where the satellite remote sensing data includes image data of a to-be-measured object in the target region. The obtaining module 910 may further obtain video data within a preset range of spatial coordinates of the to-be-measured object. The obtaining module 910 may perform steps S210 and S220 in the methods in FIG. 2 and FIG. 3, and S804 in the method in FIG. 9A and FIG. 9B.

The processing module 920 may be configured to generate a three-dimensional texture model of the to-be-measured object based on a surface texture and a three-dimensional framework model of the to-be-measured object. The processing module 920 may perform step S230 in the methods in FIG. 2 and FIG. 3, steps S201, S202, S203, and S204 in the method in FIG. 3, and S801 to S803 and S805 to S811 in the method in FIG. 9A and FIG. 9B.

Both the obtaining module 910 and the processing module 920 may be implemented by using software, or may be implemented by using hardware. For example, the following uses the processing module 920 as an example to describe an implementation of the processing module 920. Similarly, for an implementation of the obtaining module 910, refer to an implementation of the processing module 920.

A module is used as an example of a software functional unit, and the processing module 920 may include code run on a computing instance. The computing instance may include at least one of a physical host (a computing device), a virtual machine, and a container. Further, there may be one or more computing instances. For example, the processing module 920 may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same VPC, or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

A module is used as an example of a hardware functional unit, and the processing module 920 may include at least one computing device such as a server. Alternatively, the processing module 920 may be a device implemented using an application-specific integrated circuit (application-specific integrated circuit, ASIC) or a programmable logic device (programmable logic device, PLD) or the like. The PLD may be implemented by a complex programmable logic device (complex programmable logical device, CPLD), a field-programmable gate array (field-programmable gate array, FPGA), generic array logic (generic array logic, GAL), or any combination thereof.

A plurality of computing devices included in the processing module 920 may be distributed in a same region, or may be distributed in different regions. The plurality of computing devices included in the processing module 920 may be distributed in a same AZ, or may be distributed in different AZs. Similarly, the plurality of computing devices included in the processing module 920 may be distributed in a same VPC, or may be distributed in a plurality of VPCs. The plurality of computing devices may be any combination of computing devices such as a server, an ASIC, a PLD, a CPLD, an FPGA, and GAL.

Therefore, modules in the examples described in embodiments of this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

It should be noted that when the apparatus provided in the foregoing embodiment performs the foregoing method, division into the foregoing functional modules is merely used as an example for description. During actual application, the foregoing functions may be allocated as required to different functional modules for implementation, that is, an internal structure of the apparatus is divided into different functional modules to implement all or some of the functions described above. For example, the obtaining module 910 may be configured to perform any step in the foregoing methods, and the processing module 920 may be configured to perform any step in the foregoing methods. Steps implemented by the obtaining module 910 and the processing module 920 may be specified as required. The obtaining module 910 and the processing module 920 respectively implement different steps in the foregoing methods to implement all functions of the foregoing apparatus.

In addition, the apparatus embodiments and the method embodiments provided in the foregoing embodiments belong to a same concept. For specific implementation processes thereof, refer to the method embodiments. Details are not described herein again.

The method provided in embodiments of this application may be performed by a computing device, and the computing device may also be referred to as a computer system. The computing device may include a hardware layer, an operating system layer running above the hardware layer, and an application layer running above the operating system layer. The hardware layer includes hardware, for example, a processing unit, a memory, and a memory control unit. Subsequently, functions and structures of the hardware are described in detail. The operating system is any one or more computer operating systems, for example, a Linux operating system, a Unix operating system, an Android operating system, an iOS operating system, or a Windows operating system, that implement service processing by using a process (process). The application layer includes applications such as a browser, an address book, word processing software, and instant messaging software. In addition, optionally, the computer system is a handheld device, for example, a smartphone, or a terminal device, for example, a personal computer. This is not particularly limited in this application, provided that the method according to embodiments of this application can be used. The method provided in embodiments of this application may be performed by the computing device or a functional module that is in the computing device and that can invoke and execute a program.

FIG. 11 is a block diagram of a structure of a computing device 1000 according to an embodiment of this application. The computing device 1000 may be a server, a computer, or another device with a computing capability. The computing device 1000 shown in FIG. 11 includes at least one processor 1010 and a memory 1020.

It should be understood that quantities of processors and memories in the computing device 1000 are not limited in this application.

The processor 1010 executes instructions in the memory 1020, so that the computing device 1000 implements the method provided in this application. Alternatively, the processor 1010 executes instructions in the memory 1020, so that the computing device 1000 implements the functional modules provided in this application to implement the method provided in this application.

Optionally, the computing device 1000 further includes a communication interface 1030. The communication interface 1030 uses a transceiver module, for example, but not limited to, a network interface card or a transceiver, to implement communication between the computing device 1000 and another device or a communication network.

Optionally, the computing device 1000 further includes a system bus 1040. The processor 1010, the memory 1020, and the communication interface 1030 are separately connected to the system bus 1040. The processor 1010 can access the memory 1020 through the system bus 1040. For example, the processor 1010 can read and write data or execute code in the memory 1020 through the system bus 1040. The system bus 1040 is a peripheral component interconnect express (peripheral component interconnect express, PCI) bus, an extended industry standard architecture (extended industry standard architecture, EISA) bus, or the like. The system bus 1040 is categorized as an address bus, a data bus, a control bus, or the like. For ease of representation, only one thick line is used to represent the bus 1040 in FIG. 11, but this does not mean that there is only one bus or only one type of bus.

In a possible implementation, a function of the processor 1010 is mainly to interpret instructions (or code) of a computer program and process data in computer software. The instructions of the computer program and data in the computer software can be stored in a cache of the memory 1020 or the processor 1010.

Optionally, the processor 1010 may be an integrated circuit chip and has a signal processing capability. By way of example but not limitation, the processor 1010 is a general-purpose processor, a digital signal processor (digital signal processor, DSP), an ASIC, an FPGA or another programmable logic device, a discrete gate or transistor logic device, or a discrete hardware component. The general-purpose processor is a microprocessor or the like. For example, the processor 1010 is a central processing unit (central processing unit, CPU).

The memory 1020 can provide running space for a process in the computing device 1000. For example, the memory 1020 stores a computer program (specifically, program code) used to generate the process. After the computer program runs by the processor to generate the process, the processor allocates corresponding storage space to the process in the memory 1020. Further, the storage space further includes a text segment, an initial data segment, an uninitialized data segment, a stack segment, a heap segment, and the like. The memory 1020 stores, in the storage space corresponding to the process, data generated during running of the process, for example, intermediate data or process data.

Optionally, the memory is also referred to as an internal memory, and a function of the memory is to temporarily store operation data in the processor 1010 and data exchanged with an external memory, for example, a hard disk. As long as the computer is running, the processor 1010 transfers data that needs to be calculated to the memory for calculation, and transmits a result after the calculation is completed.

By way of example but not limitation, the memory 1020 is a volatile memory or a nonvolatile memory, or may include both a volatile memory and a nonvolatile memory. The nonvolatile memory may be a ROM, a PROM, an EPROM, an EEPROM, or a flash memory. The volatile memory is a random access memory (random access memory, RAM) and serves as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory 1020 of the systems and methods described in this specification is intended to include, but is not limited to, these and any memory of another proper type.

It should be understood that a structure of the foregoing enumerated computing device 1000 is merely an example for description, and this application is not limited thereto. The computing device 1000 in this embodiment of this application includes various hardware in a computer system in a conventional technology. For example, the computing device 1000 further includes a memory other than the memory 1020, for example, a magnetic disk memory. A person skilled in the art should understand that the computing device 1000 may further include another component necessary for implementing normal running. In addition, a person skilled in the art should understand that, based on a specific requirement, the computing device 1000 may further include a hardware component implementing another additional function. Moreover, a person skilled in the art should understand that the computing device 1000 may include only a component required for implementing embodiments of this application, and does not need to include all the components shown in FIG. 11.

An embodiment of this application further provides a computing device cluster. The computing device cluster includes at least one computing device. The computing device may be a server. In some embodiments, the computing device may alternatively be a terminal device, for example, a desktop computer, a notebook computer, or a smartphone.

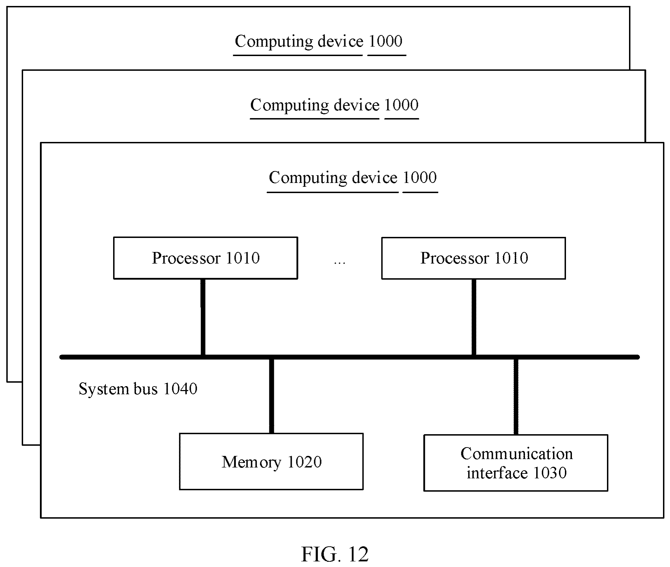

As shown in FIG. 12, the computing device cluster includes at least one computing device 1000. Memories 1020 of one or more computing devices 1000 in the computing device cluster may store same instructions used to perform the foregoing method.

In some possible implementations, the memories 1020 of the one or more computing devices 1000 in the computing device cluster may alternatively separately store some instructions used to perform the foregoing method. In other words, a combination of one or more computing devices 1000 may jointly execute instructions of the foregoing method.

It should be noted that memories 1020 of different computing devices 1000 in the computing device cluster may store different instructions respectively used to perform some functions of the foregoing apparatus. In other words, the instructions stored in the memories 1020 in different computing devices 1000 may implement functions of one or more modules in the foregoing apparatus.

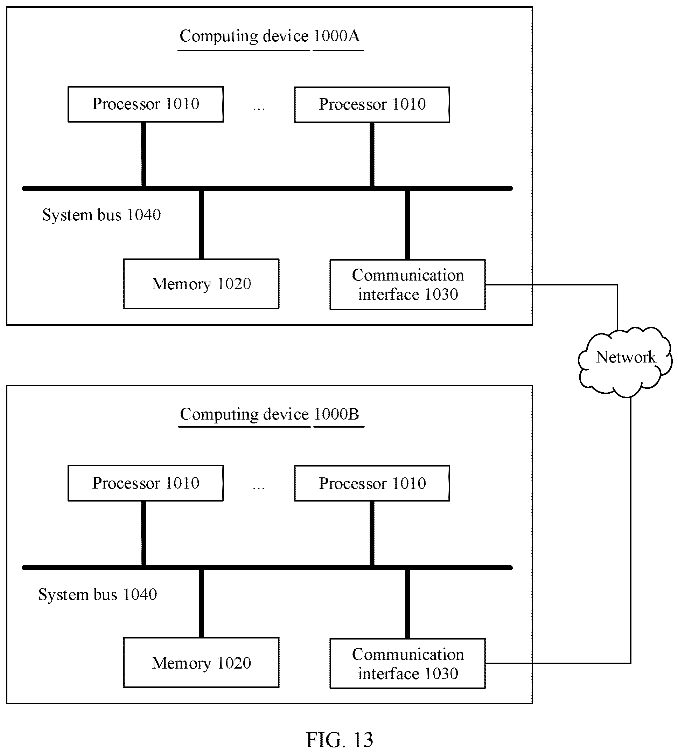

In some possible implementations, the one or more computing devices in the computing device cluster may be connected through a network. The network may be a wide area network, a local area network, or the like. FIG. 13 shows a possible implementation. As shown in FIG. 13, two computing devices 1000A and 1000B are connected through a network. Specifically, each computing device is connected to the network through a communication interface of the computing device.

It should be understood that functions of the computing device 1000A shown in FIG. 13 may alternatively be completed by a plurality of computing devices 1000. Similarly, functions of the computing device 1000B may alternatively be completed by a plurality of computing devices 1000.

An embodiment further provides a computer program product including instructions. The computer program product may be software or a program product that includes the instructions and that can run on a computing device or be stored in any usable medium. When the computer program product runs on a computing device, the computing device is enabled to perform the method provided above, or the computing device is enabled to implement functions of the apparatus provided above.

An embodiment further provides a computer program product including instructions. The computer program product may be software or a program product that includes the instructions and that can run on a computing device cluster or be stored in any usable medium. When the computer program product is run by the computing device cluster, the computing device cluster is enabled to perform the method provided above, or the computing device cluster is enabled to implement functions of the apparatus provided above.

An embodiment further provides a computer-readable storage medium. The computer-readable storage medium may be any usable medium that can be stored by a computing device, or a data storage device such as a data center, including one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive), or the like. The computer-readable storage medium includes instructions. When the instructions in the computer-readable storage medium are executed on the computing device, the computing device is enabled to perform the method provided above.

An embodiment further provides a computer-readable storage medium. The computer-readable storage medium may be any usable medium that can be stored by a computing device, or a data storage device such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. When the instructions in the computer-readable storage medium are executed by a computing device cluster, the computing device cluster is enabled to perform the method provided above.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for generating a three-dimensional texture model of a city based on composite data, wherein the method is used to generate the three-dimensional texture model of the city, the city comprises at least one region, a target region is set in the at least one region, and the method comprises:
obtaining satellite remote sensing data of the target region, wherein the satellite remote sensing data comprises image data of a to-be-measured object in the target region, and the image data is used to determine a three-dimensional framework model and spatial coordinates of the to-be-measured object;
obtaining video data within a preset range of the spatial coordinates of the to-be-measured object, wherein the video data comprises at least one video image comprising the to-be-measured object, and the at least one video image is used to determine a surface texture of the to-be-measured object; and
generating a three-dimensional texture model of the to-be-measured object based on the surface texture and the three-dimensional framework model of the to-be-measured object, wherein the three-dimensional texture model of the to-be-measured object is used to generate a three-dimensional texture model of the target region.

2. The method according to claim 1, wherein the method further comprises:
obtaining at least one target texture image of the to-be-measured object from the at least one video image, wherein each target texture image is determined based on one video image;
determining, based on spatial coordinates of the video image corresponding to each target texture image, spatial coordinates corresponding to each target texture image; and
determining the surface texture of the to-be-measured object based on the spatial coordinates of the to-be-measured object and the spatial coordinates corresponding to each target texture image.

3. The method according to claim 2, wherein the obtaining the at least one target texture image of the to-be-measured object from the at least one video image comprises:
obtaining at least one texture image of one or more objects from the at least one video image, wherein one texture image of each object is determined based on one video image, each texture image is used to determine one first feature vector, and the first feature vector indicates a feature of the texture image; and
determining the at least one target texture image from the at least one texture image of the one or more objects based on a similarity between a second feature vector and each first feature vector, wherein the second feature vector indicates an image feature of the to-be-measured object in the three-dimensional framework model.

4. The method according to claim 3, wherein a type of each object is the same as a type of the to-be-measured object.

5. The method according to claim 3 or 4, wherein the obtaining the at least one texture image of the one or more objects from the at least one video image comprises:
segmenting each video image in the at least one video image by using an object as a unit, to obtain at least one object texture image of each object; and
adjusting an angle of view of each object texture image of each object, to obtain each texture image of each object, wherein each texture image is a front view.

6. The method according to any one of claims 1 to 5, wherein the generating the three-dimensional texture model of the to-be-measured object based on the surface texture and the three-dimensional framework model of the to-be-measured object comprises:
generating a three-dimensional texture model of the to-be-measured object in target grid space based on a surface texture and a three-dimensional framework model of the to-be-measured object in the target grid space, wherein the target grid space is three-dimensional space corresponding to a target grid, a grid plane on which the target grid is located is parallel to a ground in the three-dimensional framework model, and the target grid is any grid on the grid plane.

7. The method according to any one of claims 2 to 6, wherein the determining the surface texture of the to-be-measured object based on the spatial coordinates of the to-be-measured object and the spatial coordinates corresponding to each target texture image comprises:
determining a location of each target texture image on a surface of the to-be-measured object based on the spatial coordinates of the to-be-measured object and the spatial coordinates corresponding to each target texture image; and
attaching the at least one target texture image to the surface of the to-be-measured object based on the location of each target texture image on the surface of the to-be-measured object, to synthesize the surface texture of the to-be-measured object.

8. The method according to any one of claims 2 to 7, wherein the determining, based on the spatial coordinates of the video image corresponding to each target texture image, the spatial coordinates corresponding to each target texture image comprises:
determining, based on the spatial coordinates and a resolution of the video image corresponding to each target texture image and size information of each target texture image in the corresponding video image, the spatial coordinates corresponding to each target texture image.

9. The method according to any one of claims 1 to 8, wherein the video data is obtained by at least one of the following imaging devices: a road surface checkpoint imaging device, and a ground handheld imaging device.

10. The method according to any one of claims 1 to 9, wherein the type of the to-be-measured object comprises at least one of the following: a building, a tree, a bridge, or a road.

11. A computing apparatus, wherein the computing apparatus is configured to generate a three-dimensional texture model of a city, the city comprises at least one region, a target region is set in the at least one region, and the computing apparatus comprises:
an obtaining module, configured to obtain satellite remote sensing data of the target region, wherein the satellite remote sensing data comprises image data of a to-be-measured object in the target region, and the image data is used to determine a three-dimensional framework model and spatial coordinates of the to-be-measured object, wherein
the obtaining module is further configured to obtain video data within a preset range of the spatial coordinates of the to-be-measured object, wherein the video data comprises at least one video image comprising the to-be-measured object, and the at least one video image is used to determine a surface texture of the to-be-measured object; and
a processing module, configured to generate a three-dimensional texture model of the to-be-measured object based on the surface texture and the three-dimensional framework model of the to-be-measured object, wherein the three-dimensional texture model of the to-be-measured object is used to generate a three-dimensional texture model of the target region.

12. The apparatus according to claim 11, wherein the processing module is further configured to:
obtain at least one target texture image of the to-be-measured object from the at least one video image, wherein each target texture image is determined based on one video image;
determine, based on spatial coordinates of the video image corresponding to each target texture image, spatial coordinates corresponding to each target texture image; and
determine the surface texture of the to-be-measured object based on the spatial coordinates of the to-be-measured object and the spatial coordinates corresponding to each target texture image.

13. The apparatus according to claim 12, wherein the processing module is specifically configured to:
obtain at least one texture image of one or more objects from the at least one video image, wherein one texture image of each object is determined based on one video image, each texture image is used to determine one first feature vector, and the first feature vector indicates a feature of the texture image; and
determine the at least one target texture image from the at least one texture image of the one or more objects based on a similarity between a second feature vector and each first feature vector, wherein the second feature vector indicates an image feature of the to-be-measured object in the three-dimensional framework model.

14. The apparatus according to claim 13, wherein a type of each object is the same as a type of the to-be-measured object.

15. The apparatus according to claim 13 or 14, wherein the processing module is specifically configured to:
segment each video image in the at least one video image by using an object as a unit, to obtain at least one object texture image of each object; and
adjust an angle of view of each object texture image of each object, to obtain each texture image of each object, wherein each texture image is a front view.

16. The apparatus according to any one of claims 11 to 15, wherein the processing module is specifically configured to:
generate a three-dimensional texture model of the to-be-measured object in target grid space based on a surface texture and a three-dimensional framework model of the to-be-measured object in the target grid space, wherein the target grid space is three-dimensional space corresponding to a target grid, a grid plane on which the target grid is located is parallel to a ground in the three-dimensional framework model, and the target grid is any grid on the grid plane.

17. The apparatus according to any one of claims 12 to 16, wherein the processing module is specifically configured to:
determine a location of each target texture image on a surface of the to-be-measured object based on the spatial coordinates of the to-be-measured object and the spatial coordinates corresponding to each target texture image; and
attach the at least one target texture image to the surface of the to-be-measured object based on the location of each target texture image on the surface of the to-be-measured object, to synthesize the surface texture of the to-be-measured object.

18. The apparatus according to any one of claims 12 to 17, wherein the processing module is further configured to:
determine, based on the spatial coordinates and a resolution of the video image corresponding to each target texture image and size information of each target texture image in the corresponding video image, the spatial coordinates corresponding to each target texture image.

19. The apparatus according to any one of claims 11 to 18, wherein the video data is obtained by at least one of the following imaging devices: a road surface checkpoint imaging device, and a ground handheld imaging device.

20. The apparatus according to any one of claims 11 to 19, wherein the type of the to-be-measured object comprises at least one of the following: a building, a tree, a bridge, or a road.

21. A computing device cluster, comprising at least one computing device, wherein each computing device comprises a processor and a memory, wherein
the processor of the at least one computing device is configured to execute instructions stored in the memory of the at least one computing device, to enable the computing device cluster to perform the method according to any one of claims 1 to 10.

22. A computer program product comprising instructions, wherein when the instructions are run by a computing device cluster, the computing device cluster is enabled to perform the method according to any one of claims 1 to 10.

23. A computer-readable storage medium, comprising computer program instructions, wherein when the computer program instructions are executed by a computing device cluster, the computing device cluster is enabled to perform the method according to any one of claims 1 to 10.
